# EUROPEAN PATENT SPECIFICATION

(11) **EP 1 628 189 B1**
(45) Date of publication and mention of the grant of the patent: **05.09.2007**
(21) Application number: 05004956.8
(22) Date of filing: 07.03.2005
(51) Int. Cl.: G06F 1/16

(54) **Shock absorber assembly and portable computer utilizing the same**
Stossdämpfer und tragbarer Computer
Système d'amortissement et ordinateur portable

(30) Priority: 10.08.2004 CN 200410056724
(43) Date of publication of application: 22.02.2006
(73) Proprietor: ASUSTeK Computer Inc., Peitou, Taipei City (TW)
(72) Inventor: Chen, Yi-Jen, LuZhou City Taipei County (TW)
(74) Representative: Weber, Joachim

(56) References cited:
- JP-A- 4 212 877
- US-A1- 2002 097 556
- US-A1- 2004 105 231
- PATENT ABSTRACTS OF JAPAN vol. 1998, no. 13, 30 November 1998 (1998-11-30) & JP 10 208462 A (NEC GUMMA LTD), 7 August 1998 (1998-08-07)
- PATENT ABSTRACTS OF JAPAN vol. 1995, no. 07, 31 August 1995 (1995-08-31) & JP 07 106775 A (FANUC LTD), 21 April 1995 (1995-04-21)
- PATENT ABSTRACTS OF JAPAN vol. 2003, no. 12, 5 December 2003 (2003-12-05) & JP 2004 197787 A (MATSUSHITA ELECTRIC IND CO LTD), 15 July 2004 (2004-07-15)
- PATENT ABSTRACTS OF JAPAN vol. 016, no. 557 (M-1340), 27 November 1992 (1992-11-27) & JP 04 212877 A (RICOH CO LTD), 4 August 1992 (1992-08-04)
- PATENT ABSTRACTS OF JAPAN vol. 2003, no. 12, 5 December 2003 (2003-12-05) & JP 2004 178677 A (NOK CORP), 24 June 2004 (2004-06-24)

## Description

### BACKGROUND

The invention relates to a portable computer, and in particular, to a portable computer with a shock absorber assembly that can improve shockproof effect thereof.

Conventional portable computers often comprise a hard disc drive (HDD) and CD-ROM (or DVD-ROM) disposed therein via cushioning foam.

The cushioning foam cannot, however, absorb large vibrations generated by the drive rotation with high-speed. Thus, the vibration may transmit to an operating display, affecting operations of users.

Moreover, the cushioning foam cannot absorb larger shocks immediately from external sources during portable computers received a dash. Thus, the HDD and CD-ROM (or DVD-ROM) may malfunction or suffer damage.

JP 10 208462 A describes a mounting structure for an information processing unit. In an information processor, a magnetic recording medium assembly is fixed, on a lower surface thereof, to a fixing chassis through a viscoelastic material. This fixing chassis is secured to a structure in the information processor by means of screws, or the like. The magnetic recording medium assembly is fixed, to the upper surface thereof, with a restriction plate through a viscoelastic material. According to the arrangement, vibration of the magnetic recording medium assembly is suppressed and transmission of vibration to the fixing chassis and peripheral structures is interrupted.

### SUMMARY

The object is solved by the combination of features of claim 1. The dependent claims contain advantageous embodiments of the invention

Accordingly, the embodiment of the invention provides a portable computer comprising a body, a first computer module being a battery frame and inherent in the portable computer and disposed in the body, the first module being of the type that is minimally affected by vibration in the portable computer, a second computer module disposed in the body, the second module generating vibration and requires isolation from the exterior, characterized by a supporting member disposed on the second module, a vibration reducing isolator disposed on the supporting member, a damper disposed on the first module, wherein the second module is connected to the body via the isolator, and connected to the first module via the damper for absorbing vibration.

Furthermore, the portable computer comprises a fixing member passing through the isolator to fix the module to the body.

The fixing member may be a screw, and the body comprises a screw hole. The isolator comprises a through hole corresponding to the screw hole. The fixing member enters into the screw via the through hole.

Note that hardness of the isolator is less than that of the damper.

Moreover, the supporting member comprises a notch to receive the isolator. The isolator comprises a groove combined with the notch.

### BRIEF DESCRIPTION OF THE DRAWINGS

The invention can be more fully understood by reading the subsequent detailed description and examples with references made to the accompanying drawings, wherein:
Fig. 1a is an exploded view of a portable computer;
Fig. 1b is another exploded view of the portable computer in Fig. 1a, wherein a frame and a module are assembled;
Fig. 1c is a schematic view of the assembled portable computer in Fig. 1a;
Fig. 2a is a schematic view of a combination of the module, a supporting member, and an isolator in Fig. 1a;
Fig. 2b is a schematic view of a combination of the frame and a damper in Fig. 1a;
Fig. 3a is a schematic view of a mathematical mode of a conventional portable computer;
Figs. 3b and 3c are schematic views of a mathematical mode of the portable computer in Fig. 1a; and
Fig. 4 is an exploded view of a portable computer as disclosed in a first embodiment of the invention.

### DETAILED DESCRIPTION

### First embodiment

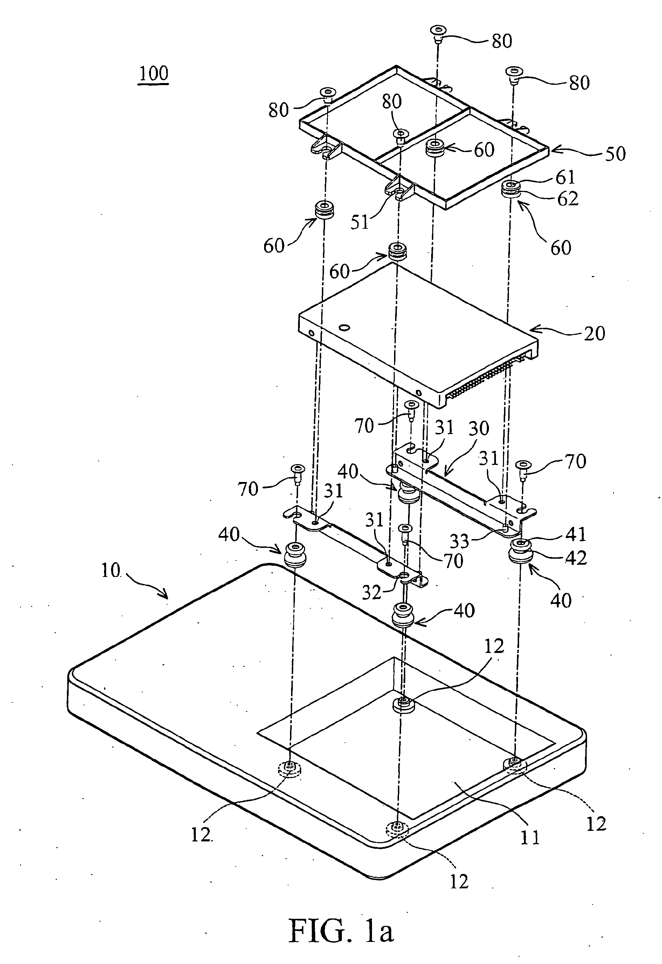

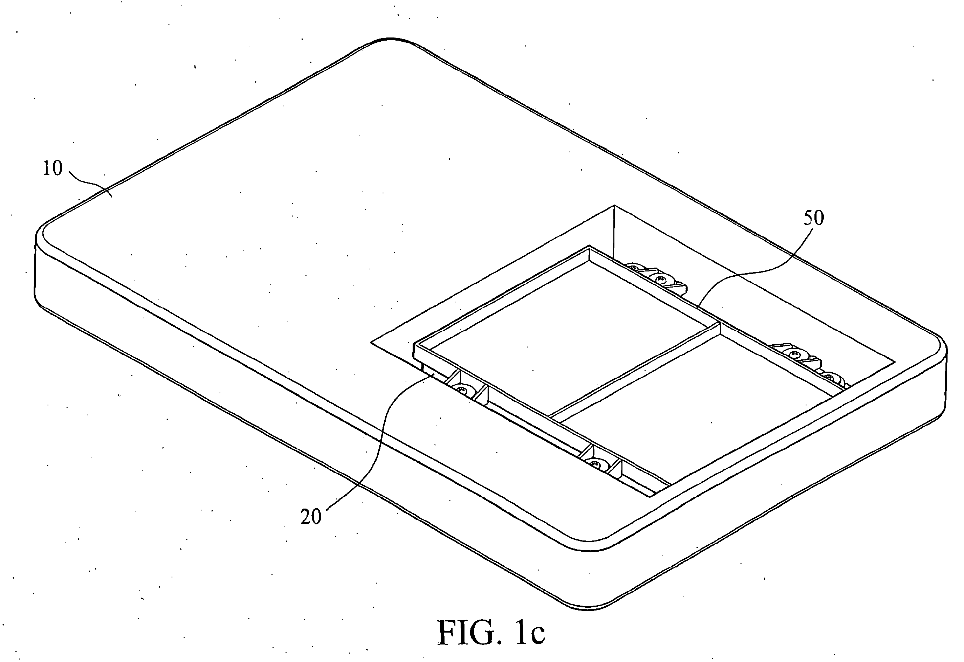

Figs. 1a-1c are schematic views of a portable computer 100. The portable computer 100 comprises a body 10, a module 20, two supporting members 30, four isolators 40, a frame 50, four dampers 60, four first fixing members 70, and four second fixing members 80. The supporting members 30, the isolators 40, the frame 50, the dampers 60, the first fixing member 70, and the second fixing members 80 constitute a shock absorber assembly of an embodiment of the invention.

The body 10 is a basic component of the portable computer 100, and comprises a receiving portion 11 with four first screw holes 12 therein. Additionally, the body 10 comprises other devices required by the portable computer 100. Such devices are not directly related to this invention, and detailed description thereof is thus omitted.

The module 20 is disposed in the body 10. Specifically, the module 20 is connected to the body 10 via the isolators 40 to enhance shock absorption thereof. Furthermore, it is understood that the module 20 may be a hard disc drive, CD-ROM, or DVD-ROM that generates vibration and requires isolation from the exterior.

Each supporting member 30 supports the module 20, and is disposed thereon. Each supporting member 30 may be shaped like a support to receive the isolators 40. Additionally, each supporting member 30 is formed with two screw holes 31 and two notches 32. Each notch 32 is C-shaped to prevent the isolator 40 from separation therefrom. Furthermore, each supporting member 30 comprises two posts 33 corresponding to holes (not shown) at the bottom of the module 20. Each supporting member 30 is fixing to the module 20 by the posts 33 in the holes of the module 20.

Each isolator 40 reduces vibration of the portable computer 100, and comprises a through hole 41 at its center and a groove 42 at its periphery. Each isolator 40 is disposed on the supporting member 30 by the notch 32 combining with the groove 42. Furthermore, each isolator 40 is material with low coefficient of elasticity (K), such as silica gel. Thus, when the computer receives an external shock, the isolators 40 effectively isolate the shock, preventing the computer from damage. Additionally, as shown in Fig. 1a, each isolator 40 may be a hollow cylindrical pad with minimized thickness to reduce the coefficient of elasticity. That is, the thickness in the radial direction of the cylindrical isolator 40 is minimized preferably.

The frame 50 absorbs vibration from the portable computer 100, and is disposed on the module 20. The frame 50 comprises two notches 51 on both sides. Each notch 51 is C-shaped to prevent the damper 60 from separating from the notch 51. It is understood that the frame 50 may be preferably made of metal with high mass, such that most vibration energy of the module is concentrated on the frame 50.

Each damper 60 reduces vibration from the portable computer 100, and comprises a through hole 61 at its center and a groove 62 at its periphery. Each damper 60 is disposed on the frame 50 by the notch 51 combining with the groove 62. Furthermore, each damper 60 is material with high coefficient of damping (C), such as silica gel. Thus, the vibration of the module 20 is transmitted to the frame 50 via the dampers 60. Additionally, as shown in Fig. 1a, each damper 60 may be a hollow cylindrical pad with a maximized thickness to enhance damping.

Note that hardness of the isolator 40 is preferably less than that of the damper 60.

As shown in Fig. 1a, each first fixing member 70 may be a screw entering into the screw hole 13 of the body 10 via the through hole 41 of the isolator 40. Thus, each first fixing member 70 passes through the isolator 40 to fix the module 20 in the body 10.

As shown in Fig. 1a, each second fixing member 80 may be a screw entering into the screw hole 31 of the supporting member 30 via the through hole 61 of the damper 60. Thus, each second fixing member 80 passes through the damper 60 to fix the frame 50 in the supporting member 30.

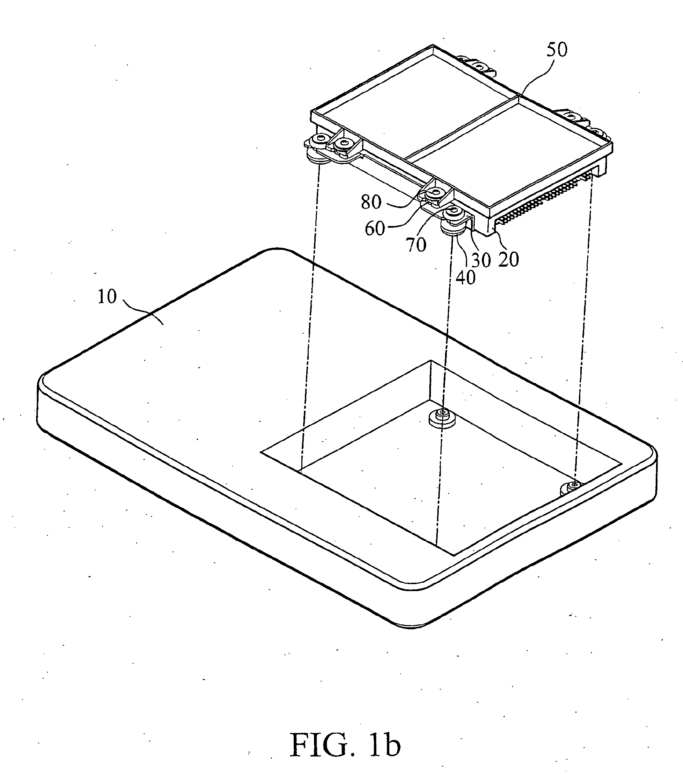

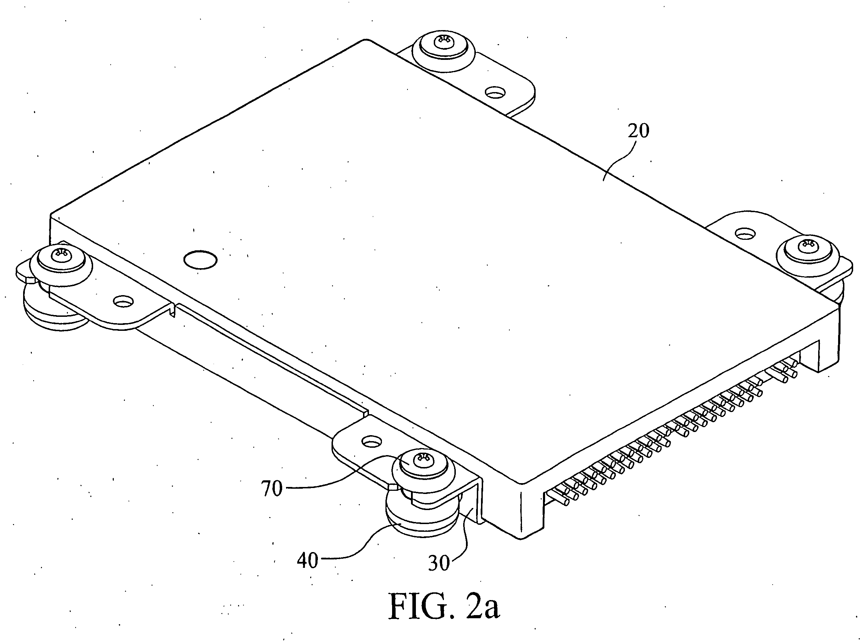

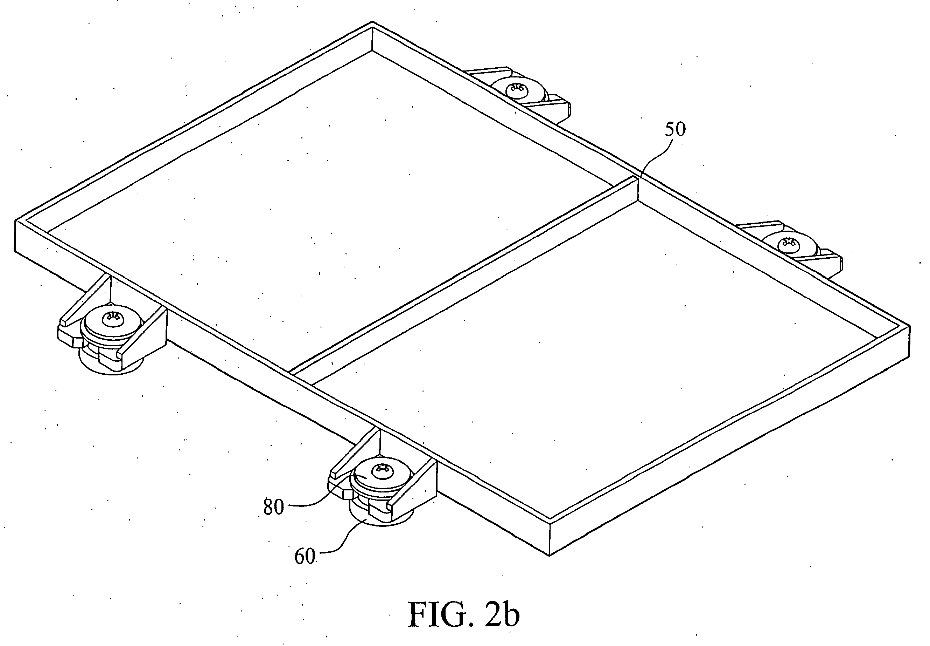

During assembly of the portable computer 100, the dampers 60 are disposed on the frame 50 as shown in Fig. 2b. Then, the second fixing members 80 fix the frame 50 in combination with the dampers 60 to the supporting members 30. The supporting members 30 are then combined with the module 20 and the isolators 40, as shown in Fig. 1b. Finally, the first fixing members 70 fix the module 20 in combination with the frame 50 to the body 10, as shown in Fig. 1c.

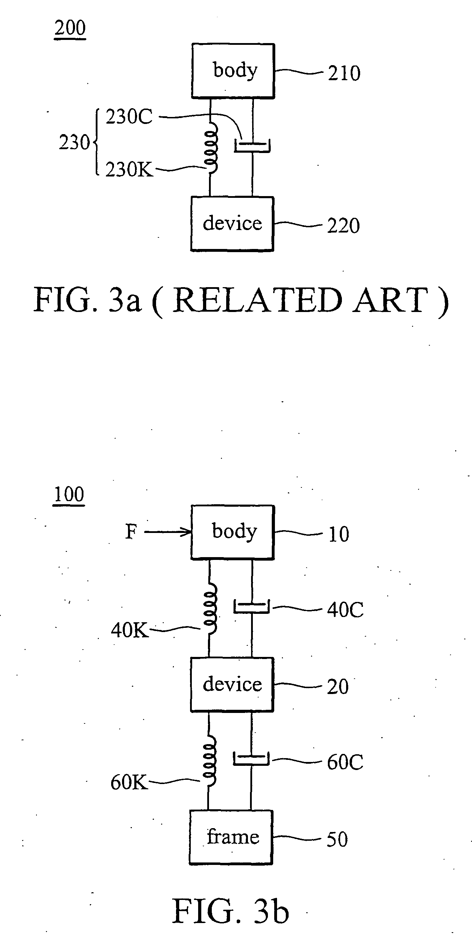

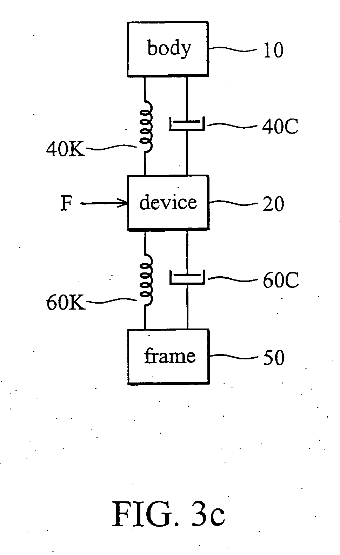

Fig. 3a is a schematic view of a mathematical mode of a conventional portable computer 200 comprising a body 210, a module 220, and cushioning foam 230. The module 220 is disposed on the body 210 via the cushioning foam 230, whereby vibration between the module 220 and the body 210 is isolated by the damping 230c and the elasticity 230k of the vibration absorption foam 230. Thus, isolation is limited. Figs. 3b and 3c are schematic views of a mathematical mode of a portable computer 100 as disclosed in embodiments of the invention. The module 20 is connected to the body 10 via the isolators 40, and to the frame 50 via the dampers 60. When external shock occurs, vibration between the module 20 and the body 10 is isolated by the damping 40c and the elasticity 40k of the isolators 40 as shown in Fig. 3b. Thus, the shock can be isolated effectively by the isolators 40 to prevent the module 20 from damages. Furthermore, when the module 20 generates vibration during high-speed rotation, the vibration can be transmitted to the frame 50 via the damping 60c and the elasticity 60k of the dampers 60 to reduce the vibration of the module 20. That is, since most of the vibration energy of the module 20 is concentrated on the frame 50 so as to reduce the vibration of the module 20. Thus, the module 20 can be stably operated. Moreover, since the module 20 is connected to the body 10 via the isolators 40, the module 20 is not directly in contact with the body 10 no matter what position of the portable computer 100 is. Thus, the shock absorber assembly can be kept normal while the module can be stably operated so that the resonance and noise of the portable computer can be improved.

It is understood that, while the shock absorber assembly is here described in application to a portable computer, it is not limited thereto, and may be applied to other electronic apparatuses.

### First embodiment of the invention

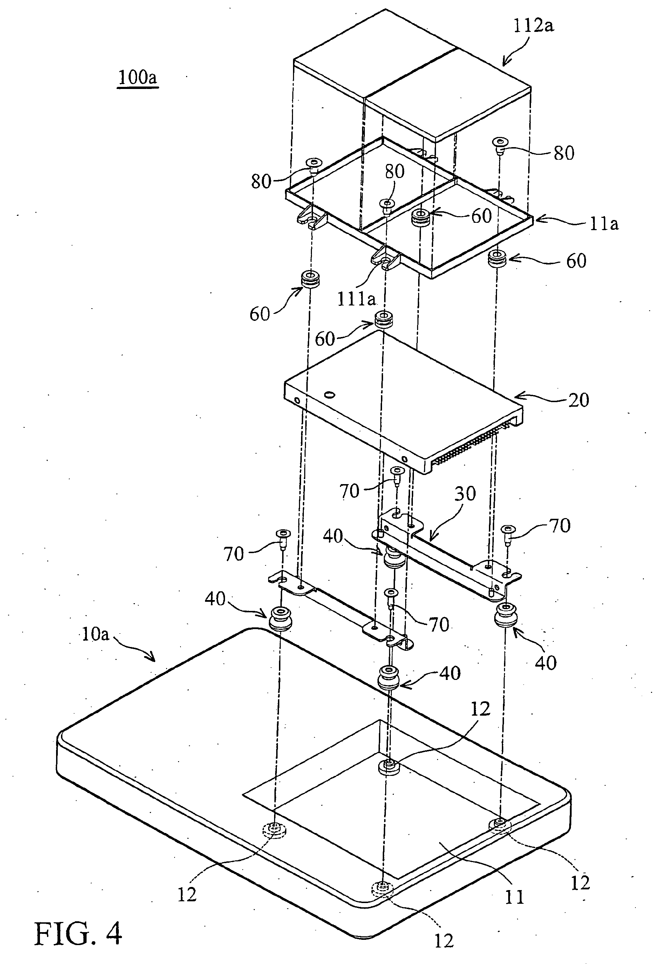

Fig. 4 is a schematic view of a portable computer 100a as disclosed in a first embodiment of the invention. The portable computer 100a comprises a body 10a having a first module 11a, a second module 20, two supporting members 30, four isolators 40, four dampers 60, four first fixing members 70, and four second fixing members 80. In this embodiment, elements the same as those of the first embodiment are labeled with the same references, and their description is omitted.

The body 10a comprises the first module 11a minimally affected by vibration in the portable computer 100a, such as a battery frame for supporting batteries 112a. The first module 11a comprises four notches 111a. The second module 20 is connected to the body 10a via the isolator 40, and is connected to the first module 11a via the damper 60.

The second module 20 may be a hard disc drive, CD-ROM, or DVD-ROM that generates vibration and requires isolation from the exterior.

The module inherent in the portable computer replaces the frame of the first embodiment here. Thus, in this embodiment, the number, the required space, and the weight of the elements are reduced while the function of the embodiment according to Figs. 1-3c can be attained.

## Claims

1. A portable computer (100a) comprising:
- a body (10a):
- a first computer module (11a) being a battery frame and inherent in the portable computer (100a) and disposed in the body (10a), the first module (11a) being of the type that is minimally affected by vibration in the portable computer (100a) ;
- a second computer module (20) disposed in the body (10a), the second module (20) generating vibration and requires isolation from the exterior;
**characterized by**:
- a supporting member (30) disposed on the second module (20);
- a vibration reducing isolator (40) disposed on the supporting member (30);
- a damper (60) disposed on the first module (11a), wherein the second module (20) is connected to the body (10a) via the isolator (40), and connected to the first module (11a) via the damper (60) for absorbing vibration.

2. The portable computer as claimed in claim 1, further comprising a fixing member passing through the isolator to fix the second module to the body.

3. The portable computer as claimed in claim 2, wherein the fixing member is a screw.

4. The portable computer as claimed in claim 2, wherein the body comprises a screw hole, the isolator comprises a through hole corresponding to the screw hole, and the fixing member enters into the screw hole via the through hole.

5. The portable computer as claimed in claim 1, wherein hardness of the isolator is less than that of the damper.

6. The portable computer as claimed in claim 1, wherein the supporting member comprises a notch receiving the isolator.

7. The portable computer as claimed in claim 6, wherein the isolator comprises a groove combined with the notch.

8. The portable computer as claimed in claim 6, wherein the notch is C-shaped to prevent the isolator from separating from the notch.

9. The portable computer as claimed in claim 1, wherein the first module comprises a notch receiving the damper.

10. The portable computer as claimed in claim 8, wherein the damper comprises a groove combined with the notch.

## Patentansprüche

1. Tragbarer Computer (100a), umfassend:
- einen Körper (10a) ;
- ein erstes Computermodul (11a), das ein Batterierahmen ist und im tragbaren Computer (100a) inhärent ist und in dem Körper (10a) angeordnet ist, wobei das erste Modul (11a) von der Art ist, die durch Vibration im tragbaren Computer (100a) minimal beeinträchtigt wird;
- ein zweites Computermodul (20), das in dem Körper (10a) angeordnet ist, wobei das zweite Modul (20) eine Vibration erzeugt und eine Isolierung von der Außenseite erfordert;
**gekennzeichnet durch**:
- ein Stützelement (30), das auf dem zweiten Modul (20) angeordnet ist;
- einen Vibrationsverringerungsisolator (40), der auf dem Stützelement (30) angeordnet ist;
- einen Dämpfer (60), der auf dem ersten Modul (11a) angeordnet ist, wobei das zweite Modul (20) über den Isolator (40) mit dem Körper (10a) verbunden ist, und über den Dämpfer (60) mit dem ersten Modul (11a) verbunden ist, um eine Vibration zu absorbieren.

2. Tragbarer Computer nach Anspruch 1, ferner umfassend ein Befestigungselement, das durch den Isolator verläuft, um das zweite Modul am Körper zu befestigen.

3. Tragbarer Computer nach Anspruch 2, wobei das Befestigungselement eine Schraube ist.

4. Tragbarer Computer nach Anspruch 2, wobei der Körper ein Schraubenloch umfasst, der Isolator ein Durchgangsloch entsprechend dem Schraubenloch umfasst, und das Befestigungselement durch das Durchgangsloch in das Schraubenloch eintritt.

5. Tragbarer Computer nach Anspruch 1, wobei die Härte des Isolators geringer als die des Dämpfers ist.

6. Tragbarer Computer nach Anspruch 1, wobei das Stützelement eine Aussparung umfasst, die den Isolator aufnimmt.

7. Tragbarer Computer nach Anspruch 6, wobei der Isolator eine mit der Aussparung kombinierte Nut umfasst.

8. Tragbarer Computer nach Anspruch 6, wobei die Aussparung C-förmig ist, um zu verhindern, dass sich der Isolator von der Aussparung trennt.

9. Tragbarer Computer nach Anspruch 1, wobei das erste Modul eine Aussparung umfasst, die den Dämpfer aufnimmt.

10. Tragbarer Computer nach Anspruch 8, wobei der Dämpfer eine mit der Aussparung kombinierte Nut umfasst.

## Revendications

1. Ordinateur portable (100a) comprenant :
- un corps (10a) ;
- un premier module d'ordinateur (11a) qui est un châssis de batterie et est inhérent dans l'ordinateur portable (100a) et est disposé dans le corps (10a), le premier module (11a) étant du type subissant une influence minimale des vibrations dans l'ordinateur portable (100a) ;
- un second module d'ordinateur (20) disposé dans le corps (10a), le second module (20) générant des vibrations et nécessitant une isolation par rapport à l'extérieur ;
**caractérisé par** :
- un élément support (30) disposé sur le second module (20) ;
- un isolateur réducteur de vibrations (40) disposé sur l'élément support (30) ;
- un amortisseur (60) disposé sur le premier module (11a), dans lequel le second module (20) est relié au corps (10a) par l'intermédiaire de l'isolateur (40), et est relié au premier module (11a) par l'intermédiaire de l'amortisseur (60) pour absorber les vibrations.

2. Ordinateur portable selon la revendication 1, comprenant en outre un élément de fixation traversant l'isolateur pour fixer le second module au corps.

3. Ordinateur portable selon la revendication 2, dans lequel l'élément de fixation est une vis.

4. Ordinateur portable selon la revendication 2, dans lequel le corps comprend un trou de vis, l'isolateur comprend un trou de traversée correspondant au trou de vis, et l'élément de fixation entre dans le trou de vis par l'intermédiaire du trou de traversée.

5. Ordinateur portable selon la revendication 1, dans lequel la dureté de l'isolateur est inférieure à celle de l'amortisseur.

6. Ordinateur portable selon la revendication 1, dans lequel l'élément support comprend une encoche recevant l'isolateur.

7. Ordinateur portable selon la revendication 6, dans lequel l'isolateur comprend une gorge combinée avec l'encoche.

8. Ordinateur portable selon la revendication 6, dans lequel l'encoche est en forme de C pour empêcher l'isolateur de se séparer de l'encoche.

9. Ordinateur portable selon la revendication 1, dans lequel le premier module comprend une encoche recevant l'amortisseur.

10. Ordinateur portable selon la revendication 8, dans lequel l'amortisseur comprend une gorge combinée avec l'encoche.
